# EUROPEAN PATENT APPLICATION

(11) **EP 1 727 366 A1**
(43) Date of publication of application: **29.11.2006**
(21) Application number: 06252697.5
(22) Date of filing: 24.05.2006
(51) Int. Cl.: H04N 7/18

(54) **A portable imaging device**

(30) Priority: 24.05.2005 NZ 54031405
(71) Applicant: Mobile Mentor NZ Limited, Auckland (NZ)
(72) Inventor: O'Shea, Denis, Hibiscus Coast, Auckland (NZ); Gisby, Todd, Torbay, Auckland (NZ)
(74) Representative: Finnie, Peter John

(57) **Abstract**

An imaging device includes a camera housed and suspended above a hand held base platform. A supporting arm fixed to the base platform supports the camera. The base platform has a support surface facing the camera. The support surface is intended for supporting an object pictured by the camera.

In use a user holds the base platform in one hand with an object to be pictured by the camera resting on the base platform. The base platform may be sized so that a user can simultaneously hold the base platform and grip the item on the base platform. The item may be for example a mobile phone, personal digital assistant (PDA) or similar hand held electronic device. The imaging device is particularly useful in a training or lecturing environment where the user may remain mobile while projecting images of the object held on the base platform and manipulating the object on the base platform at the same time.

## Description

### FIELD OF THE INVENTION

The present invention relates to portable imaging devices.

### BACKGROUND OF THE INVENTION

During lectures, presentations and product demonstrations it is often necessary for the presenter to display information to the audience. Methods include devices such as televisions, overhead projectors, object projectors, and video projectors to display images on a

screen. These methods are all advantageous for slide shows or displaying information from a page but unfortunately they are also restricted to just these things.

The inventors have perceived need for a presenter to demonstrate an object to an audience with an interactive interface not otherwise displayable by conventional means. For example: demonstrating the interface of a mobile telephone where the screen is not otherwise viewable by a large audience. Allowing the presenter to be mobile during the presentation would be another advantageous feature.

An internet website, www.ideanresearch.com/camero presents a device promoted under the name "Camero P". This appears to have an adjustable camera suspended above a mobile phone. The camera is held above the mobile phone by a supporting arm. It appears that the base of the support arm has a clip designed to clamp to the top of a mobile phone. The website suggests that the camera may include a wireless interface to send the video data to a remote video projector to display the image on a wall. Unfortunately this device is specifically restricted for use with a limited range of mobile telephones by its clamping mechanism. The device does not appear useful for other portable imaging applications such as the inventors perceive a need for.

### SUMMARY OF THE INVENTION

It is the object of the present invention to provide a portable imaging device that goes some way towards overcoming the above disadvantages or will at least provide the public/industry with a useful choice.

In one aspect the invention consists in an imaging device comprising a camera housed and suspended above a hand held base platform by a supporting arm fixed to said base platform, said base platform having a support surface facing said camera intended for supporting an object to be pictured by said camera.

According to a further aspect of the invention the camera is a video camera and said device includes a built in wireless transmitter connected to receive and transmit image data from said camera.

According to a further aspect of the invention said base platform is an elongate member having a flat or substantially flat upper surface facing said camera.

According to a further aspect of the invention said separation between said camera and said upper surface of said elongate member is between 40mm and 120mm.

According to a further aspect of the invention said separation is variable through a range between 50mm and 100mm.

According to a further aspect of the invention said separation is variable through a range of approximately 80mm, from a separation of approximately 40mm to a separation of approximately 120mm.

According to a further aspect of the invention said elongate member is from 100mm to 200mm long and from 30mm to 100mm wide.

According to a further aspect of the invention said elongate member is approximately 130mm long by approximately 30mm wide.

According to a further aspect of the invention said support arm is integrally fixed to said elongate member.

According tn a further aspect of the invention said support arm extends rigidly from one end of said elongate member.

According to a further aspect of the invention said support surface provides a high degree of friction with the object.

According to a further aspect of the invention said support arm connecting between the camera and the base platform is adjustable to vary the angle of the camera and to vary the separation of the camera from the platform.

According to a further aspect of the invention an adjustable clamp holds the camera and allows the height of the video camera above the base platform to be adjusted by moving the portion of the tubular housing within the clamp.

According to a further aspect of the invention an adjustable hinge connects the camera to the support arm so the camera angle can be optimised.

According to a further aspect of the invention the adjustable hinge includes a link, pivotally connected at one end to said support arm and at the other end pivotally connected to said camera, said pivotal connections being about parallel axes, so that both the camera height and the camera angle can be adjusted.

According to a further aspect of the invention the imaging device includes a lanyard and a releasable connection between said lanyard and said base platform.

According to a further aspect of the invention said releasable connection is a magnetic connection.

According to a further aspect of the invention a power source such as a battery is housed within the base platform, and a power lead extends from said power source to said camera, through said support arm.

According to a further aspect of the invention a switch provided in the power supply circuit between said power source and said camera.

According to a further aspect of the invention said switch is located on said base platform.

According to a further aspect of the invention said base platform is an elongate member having a flat or substantially flat upper surface facing said camera and wherein said support arm is integrally fixed to said elongate member.

According to a further aspect of the invention an adjustable hinge connects the camera to the support ann, the hinge including a link, pivotally connected at one end to said support arm and at the other end pivotally connected to said camera, said pivotal connections being about parallel axes, so that both the camera height and the camera angle can be adjusted.

According to a further aspect of the invention a switch provided in the power supply circuit between said power source and said camera, said switch being located on said base platform.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

### BRIEF DESCRIPTION OF THE DRAWINGS

One preferred embodiment of the present invention is described below with reference to the accompanying drawings.
Figure 1 is a side view of an imaging device according to one preferred embodiment of the present invention.
Figure 2 is an end view of the imaging device as shown in Figure 1.
Figure 3 is a cross-sectional view of the imaging device of Figure 1, illustrating the base platform housing a power source and the position of the camera inside the housing.
Figure 4 is a perspective view of the imaging device of figure 1.

### DETAILED DESCRIPTION OF THE PREFERRED EMBODIMENT

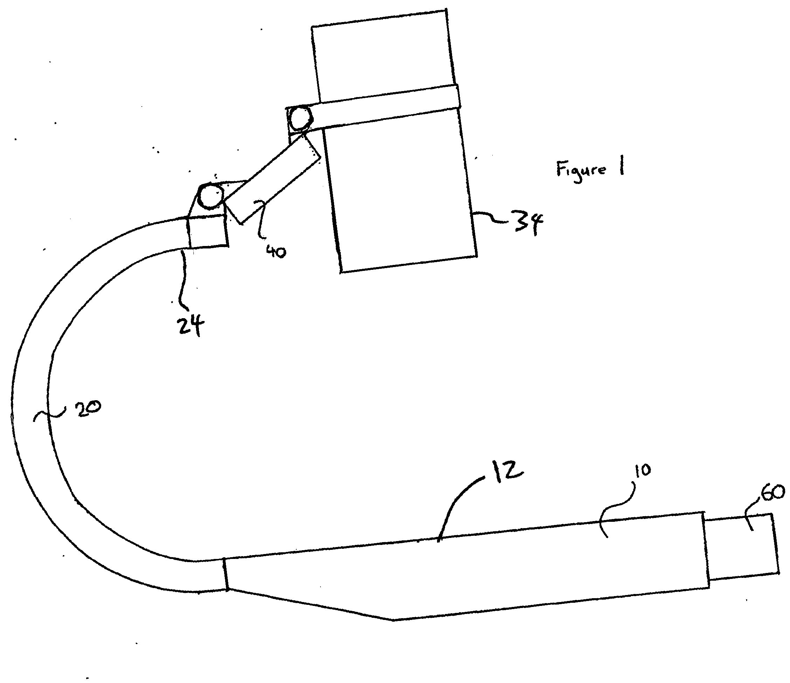

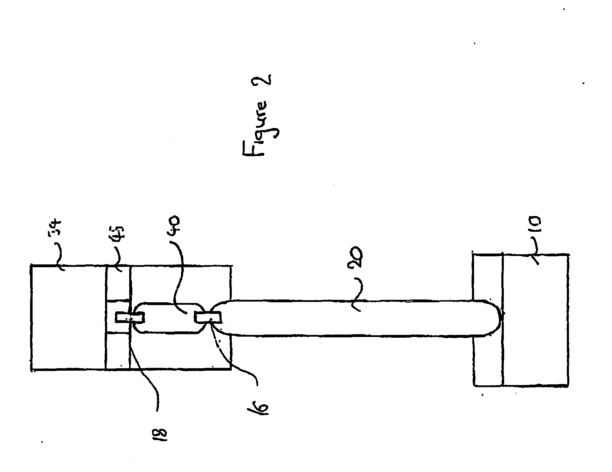

One preferred imaging device is illustrated in Figures 1 to 5.

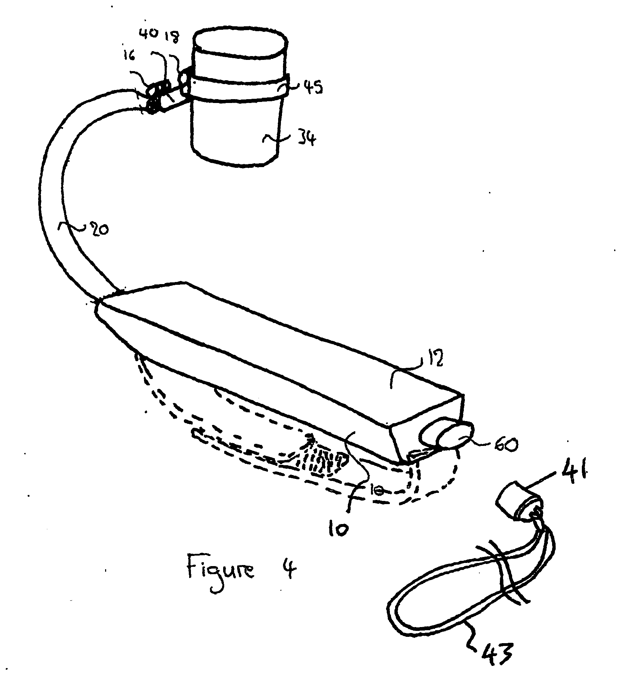

The imaging device includes a base platform 10 on which a presenter can place an object they wish to demonstrate. The base platform is approximately 130mm long, 30mm wide and 20mm high which enables the base platform to be easily held in the palm of the presenter's hand. These dimensions could vary within a range that still allows the base platform to be held comfortably with one hand. For example a width up to 100mm would be possible. However, it is preferred that the platform is narrower than objects that the user may wish to provide on the platform, so that the user may grip both the platform and the object with one hand. Accordingly, width of 50mm or less is preferred. The underside of the base platform may be profiled to fit the palm of a hand, for example having a convex curve, or chamfers at either side. The base platform could be provided with additional arrangements to provide stability relative to the hand. For example a strap may extend between the ends of the base platform. A user may hold the base platform with the strap passing across the back of the hand. The strap may allow for adjustment of the strap length, for example using a hook and loop fastener system, or buckle. Such a strap using a book and loop fastener is illustrated in broken lines in Figure 4.

The base platform has a top surface 12 which is substantially flat. The object is placed on this flat upper surface to help stabilise the object. The top surface is preferably provided with a gripping material covering to provide a substantial amount of friction to the object for extra stability. The gripping material may be, for example, a textile, rubber or soft plastic covering.

A support arm 20 is connected to one end of the base platform 10. The arm is preferably shaped in an arc that curves approximately 180 degrees. The lower end of the arc is attached to the base platform. The upper end of the arm 24 is approximately 80mm above the upper surface of the base platform.

The imaging device preferably has a miniature video camera fixed to the upper end 24 of the support arm 20. The camera may be, for example, a Shenzhen Anposi W302C. The video camera functions with an accompanying wireless transmitter to transmit video information. A remote wireless receiver may decode the video information and send it to a display or capture device such as a television, data projector or computer.

An adjustable mounting is provided between the end of the support arm 24 and the camera 30. The adjustable mounting preferably allows for adjusting the view angle of the camera 30 and for adjusting the separation of the camera from the upper surface 12 of the base platform 10. In the preferred embodiment the adjustable mounting includes an articulated link 40 and an adjustable camera mount 45.

The miniature video camera and transmitter 30 are housed within a tubular sleeve 34. A circular clamp encircles the tubular sleeve. The circular clamp is rigidly connected to the end of the articulated hinge. When the clamping mechanism is loose the tubular sleeve is free to move up and down. This allows for approximately 60mm of height adjustment to be made for the camera relative to the base platform. The tension of the circular clamp is adjusted by a screw to clamp and unclamp the tubular housing.

The articulated link connects between the camera mount 45 and the rigid support arm. The link is screwed to the support arm 20 by a first hinge 16. The link is screwed to the adjustable camera mount 45 by a second hinge 18. Hinges 16 and 18 are preferably very stiff and may be locked in position by screws 21. The range of movement of the articulated link provides a further height adjustment of approximately 20mm. This gives a maximum height of the camera above the base platform of 120mm, and a minimum height of 40mm by adjustment of both the articulated hinge and clamping mechanism. The articulated link also allows the angle of the camera housing to be offset relative to the angle of the base platform. This is useful for the presenter to allow for different angles of attack for the displayed image, or for where the top surface of the object in question does not have a top surface parallel to the top surface of the base platform.

The base platform includes a chamber 50, closed by a cover 56, which houses a power supply such as a 9V battery 52. A power lead 54 connects to the battery and extends through the support arm and articulated link to supply power to the camera.

The imaging device may include a clip for securing the device to the user when not in active use. For example the base platform may be provided with a magnet 60 at the end opposite the support arm end. The magnet 60 may secure to a complimentary magnet 41 on a lanyard worn by the user 43.

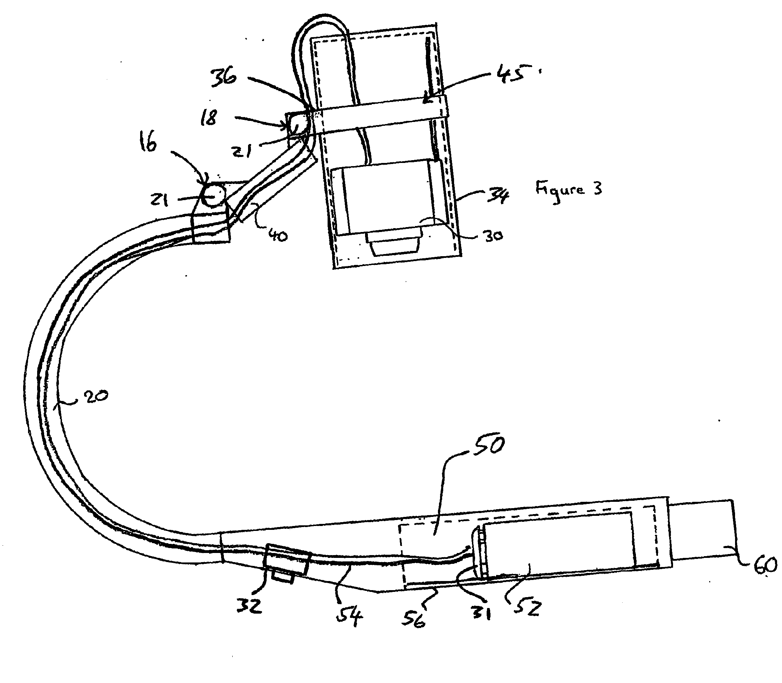

A switch may be provided for activation and deactivation of the camera. The switch may be located on the camera housing or conveniently under the base platform. For example, in Figure 3, a switch 32 is included in the power supply lead extending from battery connector 31 to the camera package 30.

In use a user cradles the platform 10 in the palm of their hand with the fingers gripping the sides of the platform. The user places a specimen on the upper surface 12 of the base platform 10. The user may adjust the height of the camera by overpowering the resistance offered by the stiff hinges 16 and 18. For larger specimens, such as electronic devices, the user may cradle the platform in the palm of their hand, and grip the sides of the specimen device.

The prototype device illustrated is fabricated from metal, with the upper support arm welded to the base platform. However it will be appreciated that the device could advantageously be made from plastic or other mouldable material.

## Claims

1. An imaging device comprising a camera housed and suspended above a hand held base platform by a supporting arm fixed to said base platform, said base platform having a support surface facing said camera intended for supporting an object to be pictured by said camera.

2. An imaging device as claimed in claim 1 wherein said camera is a video camera and said device includes a built in wireless transmitter connected to receive and transmit image data from said camera.

3. An imaging device as claimed in either claim 1 or claim 2 wherein said base platform is an elongate member having a flat or substantially flat upper surface facing said camera and wherein said support arm is integrally fixed to said elongate member.

4. An imaging device as claimed in claim 3 wherein said separation between said camera and said upper surface of said elongate member is between 40mm and 120mm.

5. An imaging device as claimed in claim 4 wherein said separation is variable through a range between 50mm and 100mm.

6. An imaging device as claimed in any one of claims 3 to 5 wherein said elongate member is from 100mm to 200mm long and from 30mm to 100mm wide.

7. An imaging device as claimed in any one of claims 1 to 6 wherein an adjustable hinge connects the camera to the support arm, the hinge including a link, pivotally connected at one end to said support arm and at the other end pivotally connected to said camera, said pivotal connections being about parallel axes, so that both the camera height and the camera angle can be adjusted.

8. An imaging device as claimed in any one of claims 1 to 7 including a lanyard and a releasable connection between said lanyard and said base platform.

9. An imaging device as claimed in any one of claims 1 to 8 wherein a power source such as a battery is housed within the base platform, and a power lead extends from said power source to said camera, through said support arm.

10. An imaging device as claimed in claim 9 including a switch in the power supply circuit between said power source and said camera, said switch being located on said base platform.
